# EUROPEAN PATENT APPLICATION

(11) **EP 1 777 245 A1**
(43) Date of publication of application: **25.04.2007**
(21) Application number: 05770338.1
(22) Date of filing: 08.08.2005
(51) Int. Cl.: C08G 63/183, B29B 11/12, B29C 49/02, B29K 67/00

(54) **POLYESTER RESIN FOR COMPRESSION MOLDING, PROCESS FOR PRODUCTION OF PREFORMS, AND PREFORMS**

(30) Priority: 11.08.2004 JP 2004234546
(71) Applicant: TOYO SEIKAN KAISHA, LTD., Tokyo 100-8522 (JP)
(72) Inventor: KITANO, Yoshihiro, c/o Toyo Seikan Group Corporate, Yokohama-shi, Kanagawa 2400062 (JP); KIKUCHI, Atsushi, c/o Toyo Seikan Group Corporate, Yokohama-shi, Kanagawa 2400062 (JP)
(74) Representative: Manley, Nicholas Michael
(86) International application number: PCT/JP2005/014866
(87) International publication number: WO 2006/016683

(57) **Abstract**

A polyester resin for compression molding comprising chiefly ethylene terephthalate units and having an inherent viscosity in a range of 0.6 to 1.3 dL/g, containing a diethylene glycol in an amount of smaller than 2.3 mol%, and containing a monohydroxyethyl terephthalate and a bishydroxyethyl terephthalate in a total amount of not larger than 0.005% by weight. A mass of a molten resin which is the polyester resin can be fed to a compression-molding apparatus maintaining stability for extended periods of time, featuring excellent properties for being conveyed and for enhancing the productivity.

## Description

### (Technical Field)

The present invention relates to a polyester resin for compression molding. More specifically, the invention relates to a polyester resin for compression molding effectively preventing the resin from depositing on the conveyer means that feeds a mass of the molten resin into a compression-molding machine and featuring excellent conveying performance enabling the mass of the molten resin to be smoothly fed into the compression-molding machine for extended periods of time, to a preform made of the above resin and to a method of producing the preform maintaining excellent productivity.

### (Background Art)

As the containers for containing beverages, there have been widely used those made of a synthetic resin such as polyethylene terephthalate. These containers are produced by a method of forming, in advance, a preform with a bottom having a size considerably smaller than the final container by injection-molding the synthetic resin, pre-heating the preform at its drawing temperature to stretch and draw it in the axial direction in a blowing metal mold, and blow-drawing the preform in the circumferential direction (see, for example, JP-A-4-154535).

As for producing the preform, further, there has been known a method of compression-molding a resin since the residence time in the molding machine is so short as will not to deteriorate the resin, and no gate portion is existing in the bottom portion. For example, there has been proposed a method of producing the preform comprising a step of extruding a melt of a thermoplastic resin and cutting it into a mass of the melt of nearly a predetermined amount, a step of feeding the mass of melt into a mold by so arranging a male mold and a female mold as to move relative to each other, a step of compression-molding the mass of melt into a molded article having a body wall with bottom and a mouth portion while discharging the air remaining in the mold, and a step of cooling and solidifying the compression-molded article and discharging the molded article out of the mold (see JP-A-2000-25729).

In forming the preform by the above compression molding, the synthetic resin must be fed to the female mold means or the male mold means prior to defining a mold space between them by closing the male mold means and the female mold means. To feed the synthetic resin, there has been proposed a synthetic resin feeding device which holds the synthetic resin in a molten state that is separated from an extrusion opening of the extrusion nozzle, and conveys it to a desired portion of the molding device (JP-A-2000-280248).

### (Disclosure of the invention)

When an ordinary polyester resin such as a polyethylene terephthalate is fed as a mass of the molten resin to the compression-molding machine by using a synthetic resin feeding device, however, it often becomes difficult to reliably feed the mass of the molten resin to the compression-molding device after the passage of a certain period of operation time.

The inventors have studied the cause and have discovered the fact that when a certain period of time passes from the start of operation of the molding machine for continuously forming the preform by the compression molding, particular components deposit and build up on the holding means (holder) for holding the mass of the molten resin in the synthetic resin feeding device and on the guide means (throat) that guides the mass of the molten resin into the compression mold, and the material thus built up hinders the mass of the molten resin from falling causing the timing for falling the mass of the molten resin to be varied.

It is therefore an object of the present invention to provide a polyester resin for compression molding which enables the mass of the molten resin to be fed to the compression-molding machine maintaining stability for extended periods of time.

Another object of the present invention is to provide a production method capable of forming a preform maintaining good productivity by feeding the mass of the molten resin to the compression-molding machine maintaining stability for extended periods of time.

According to the present invention, there is provided a polyester resin for compression molding comprising chiefly ethylene terephthalate units and having an inherent viscosity in a range of 0.6 to 1.3 dL/g, containing a diethylene glycol in an amount of smaller than 2.3 mol%, and containing a monohydroxyethyl terephthalate and a bishydroxyethyl terephthalate in a total amount of not larger than 0.005% by weight.

The polyester resin for compression molding of the invention has a melt viscosity of 100 to 500 Pa·s at a temperature of 265°C and at a shearing rate of 2000 sec⁻¹.

According to the present invention, there is further provided a method of producing a preform by using a polyester resin comprising chiefly ethylene terephthalate units and having an inherent viscosity in a range of 0.6 to 1.3 dL/g, containing a diethylene glycol in an amount of smaller than 2.3 mol%, and containing a monohydroxyethyl terephthalate and a bishydroxyethyl terephthalate in a total amount of not larger than 0.005% by weight, feeding a mass of a molten resin which is a polyester resin obtained by melt-kneading the above polyester resin to a compression-molding machine by using a conveyer means, and compression-molding the mass of the molten resin.

According to the present invention, there is further provided a preform obtained by compression-molding a mass of a molten resin which is a polyester resin obtained by melt-kneading a polyester resin comprising chiefly ethylene terephthalate units and having an inherent viscosity in a range of 0.6 to 1.3 dL/g, containing a diethylene glycol in an amount of smaller than 2.3 mol%, and containing a monohydroxyethyl terephthalate and a bishydroxyethyl terephthalate in a total amount of not larger than 0.005% by weight.

The polyester resin for compression molding of the present invention is the one comprising chiefly ethylene terephthalate units and having an inherent viscosity in a range of 0.6 to 1.3 dL/g, containing a diethylene glycol (hereinafter abbreviated as DEG) in an amount of smaller than 2.3 mol%, and containing a monohydroxyethyl terephthalate (hereinafter abbreviated as MHET) and a bishydroxyethyl terephthalate (hereinafter abbreviated as BHET) in a total amount of not larger than 0.005% by weight.

To form the preform of the polyester resin by the compression-molding as described above, there is used a feeding device for feeding a mass of the molten metal (drop) which is the polyester resin to the compression-molding machine. In the feeding device, however, a deposit builds up on the holding means (holder) for holding the mass of the molten resin and on the guide means (throat) that works as a guide from the holding means to the compression mold as the mass of the molten resin comes in contact therewith an increased number of times. When a certain period of time passes from the start of operation of the molding machine, the mass of the molten resin (drop) is caught by the deposit that is built up causing the timing for falling the mass of the molten resin to be varied, i.e., causing the timing to be out of synchronism with the preset timing of the compression-molding machine, and making it difficult to reliably feed the mass of the molten resin to the compression mold.

In order to clarify the cause that varies the falling timing of the mass of the molten resin, the present inventors have analyzed what kinds of the components in the mass of the molten resin build up, and have discovered that the monomer components, oligomer components and high molecular components in the polyester resin are building up. In particular, the inventors have discovered that the timing for falling the mass of the molten resin varies due directly to the oligomer component and the high molecular components having average molecular weights smaller than the polymerization degrees among the entangling points (Japanese Patent Application No. 2004-155734). In the present invention, the polyester resin having a DEG content of smaller than 2.3 mol% and, particularly, in a range of 1.0 to 2.2 mol%, and containing a monohydroxyethyl terephthalate and a bishydroxyethyl terephthalate in a total amount of not larger than 0.005% by weight, makes it possible to suppress the resin from depositing on the conveyer means irrespective of the contents of the oligomer component and of the high molecular components of molecular weights smaller than the polymerization degrees among the entanling points, that are direct causes of preventing the mass of the molten resin from smoothly falling, and makes it possible to efficiently form the preform by the compression molding.

The present inventors have found through the experiment that the amount of DEG suppresses the deposition of the polyester resin on the conveyer means. Though the reasons have not been clarified yet, it is presumed that the DEG is not thermally stable and its molecular chains are liable to be cut. Therefore, as the content of the low molecular components increases or as the content of DEG increases, the melting point of the polyester resin decreases, whereby the adhesiveness of the resin increases at a temperature of extruding the mass of the molten resin.

These action and effect of the invention will become obvious from the results of Examples appearing later. That is, the polyester resin having the DEG content of smaller than 2.3 mol% does not adhere to the holder, and the mass of the molten resin can be fed to the compression molding machine for extended periods of time (Examples 1 to 5). On the other hand, the polyester resin having the DEG content of not smaller than 2.3 mol% adheres to the holder after the passage of a certain period of time from the start of operation preventing the mass of the molten resin from smoothly falling, causing the timing of falling to be varied and making it difficult to feed the mass of the molten resin to the compression-molding machine maintaining stability (Comparative Examples 3 and 4).

The oligomer component and the high molecular components deposit on the holder due to the presence of the monomer components. In the present invention, therefore, among the monomer components working as a binder to deposit the oligomer component and the high molecular components that become a direct cause of hindering the fall of the mass of the molten resin, the total content of MHET and BHET that are considered to be a cause of deposition due to their low melting points is decreased to be not higher than 0.005% by weight in the pellets. Being assisted by the content of DEG, therefore, it is made possible to effectively prevent the deposition of the oligomer component and the high molecular components, whereby the deposit builds up little on the holder and the like, and the timing for falling the mass of the molten resin is maintained stable for extended periods of time. When the amounts of MHET and BHET are larger than the above range, on the other hand, the MHET and BHET deposit in large amounts on the holder inducing the deposition of the oligomer component and the high molecular components and, as a result, accelerating the timing for falling the mass of the molten resin to be varied.

The above action and effect of the invention are obvious even from the results of Examples appearing later. When the polyester resin contains the MHET and the BHET in a total amount which is not smaller than 0.005% by weight, the oligomer component and high molecular components tend to deposit even when the content of DEG is within the range of the present invention, and the timing for falling the mass of the molten resin varies, too (Comparative Example 2).

By using the polyester resin for compression molding of the present invention, the timing does not vary for falling the mass of the molten resin, and the mass of the molten resin can be fed to the compression-molding machine maintaining stability.

Further, the polyester resin that is used contains the DEG in an amount of smaller than 2.3 mol % and contains the MHET and the BHET in a total amount of not larger than 0.005% by weight making it possible to suppress the deposition of the resin on the conveyer means irrespective of the contents of the oligomer component and the high molecular components which are a direct cause of preventing smooth falling of the mass of the molten resin. Therefore, the conveyer means needs not be cleaned so frequently, and the preform can be efficiently formed by the compression molding.

### (Brief Description of the Drawings)

Fig. 1 is a view showing a molding system as a whole to illustrate the molding apparatus used for a method of producing a preform according to the present invention; and
Fig. 2 is a sectional view of a portion X in Fig. 1 and illustrates a state where cutting/holding means is holding a mass of a molten resin for falling the mass of the molten resin.

### (Best Mode for Carrying Out the Invention)

### (Synthesis of the polyester resin)

The polyester resin of the present invention can be prepared by a known method of synthesizing a polyester resin but so as to have an inherent viscosity in a range of 0.6 to 1.3 dL/g, to contain a diethylene glycol (DEG) in an amount of smaller than 2.3 mol% and to contain a monohydroxyethyl terephthalate (MHET) and a bishydroxyethyl terephthalate (BHET) in a total amount of not larger than 0.005% by weight. Namely, the polyester resin of the invention is obtained by subjecting a starting material comprising chiefly a terephthalic acid or an ester-forming derivative thereof and an ethylene glycol or an ester-forming derivative thereof to the liquid-phase polymerization and to the solid-phase polymerization in the presence of a catalyst.

The polyester resin is usually synthesized by a method of synthesizing a polyethylene terephthalate (PET) by directly reacting a highly pure terephthalic acid (TPA) with an ethylene glycol (EG) usually through two steps, i.e., (A) a step of reacting the TPA with the EG to synthesize a bis-β-hydroxyethyl terephthalate (BHET) or a low polycondensation product thereof, and (B) a step of effecting the polycondensation by distilling the ethylene glycol off the BHET or the low polycondensation product thereof.

The BHET or the low polycondensation product thereof can be synthesized under the known conditions. For instance, the esterification is conducted by selecting the amount of EG to be 1.1 to 1.5 mol times as great as that of the TPA, heating the system at a temperature of not lower than the boiling point of EG, e.g., at 220 to 260°C under a pressure of 1 to 5 kg/cm² while distilling the water off the system. In this case, the TPA itself works as a catalyst and there is no need of using the catalyst that is usually used. It is, however, also allowable to use an esterification catalyst that has been known per se.

In the polycondensation step of the second stage, a polycondensation catalyst that has been known per se. is added to the BHET or the low polycondensation product thereof obtained in the first stage, and the reaction is conducted by gradually decreasing the pressure while maintaining the reaction system at 260 to 290°C, stirring the reaction system under a finally reduced pressure of 1 to 3 mmHg and distilling the formed EG off the system. The molecular weight is detected relying upon the viscosity of the reaction system. When a predetermined value is reached, the reaction product is blown out of the system and is cooled to obtain the product as chips thereof. As the polycondensation catalyst, there can be used a germanium compound, a titanium compound or an antimony compound. It is, however, desired to use a germanium compound such as germanium dioxide, germanium tetraethoxide or germanium tetrabutoxide from the standpoint of maintaining the crystallization temperature in the above-mentioned range.

The content of DEG in the polyester resin can be decreased by suitably selecting the reaction conditions and the additives. In this case, the additives may be tertiary amines such as triethylamine and tri-n-butylamine; quaternary ammonium such as tetraethylammonium hydroxide and tetrabutylammonium hydroxide; and basic compounds such as lithium carbonate and sodium carbonate, and their amount of addition is desirably in a range of 0.005 to 1% by weight.

The polyester resin for compression molding of the invention chiefly comprises the ethylene terephthalate units, i.e., in which not less than 50 mol% of the ester recurring units are the ethylene terephthalate units. Particularly desirably, the thermoplastic polyester is the one in which most of the ester recurring units and, generally, not less than 70 mol% thereof and, particularly, not less than 80 mol% thereof are ethylene terephthalate units, and has a glass transition point (Tg) of 50 to 90°C, particularly, 55 to 80°C, and a melting point (Tm) of 200 to 275°C and, particularly, 220 to 270°C.

It is desired to use the homopolyethylene terephthalate from the standpoint of resistance against the heat and pressure. It is, however, also allowable to use a copolymerized polyester containing a small amount of ester units other than the ethylene terephthalate units. As the dibasic acid other than the terephthalic acid, there can be exemplified aromatic dicarboxylic acids such as isophthalic acid, phthalic acid and naphthalenedicarboxylic acid; alicyclic dicarboxylic acid such as cyclohexanedicarboxylic acid; aliphatic dicarboxylic acids such as succinic acid, adipic acid, sebacic acid and dodecanedioic acid, which may be used in one kind or in a combination of two or more kinds. As the diol components other than the ethylene glycol, there can be exemplified propylene glycol, 1,4-butanediol, diethylene glycol, 1,6-hexylene glycol, cyclohexane dimethanol and ethylene oxide adduct of bisphenol A, which may be used in one kind or in two or more kinds.

Low molecular components such as cyclic trimers formed accompanying the crystallization of the polyester resin precipitate onto the outer side, and the content of the low molecular components decreases. The crystallization temperature lies in an optimum range in regard to reducing the content of the low molecular components. In the case of the homopolyethylene terephthalate, in general, the crystallization temperature is in a range of 100 to 140°C and, particularly, in a range of 115 to 125°C. Further, the treating time is from 100 to 180 minutes and, particularly, from 120 to 150 minutes. The heat treatment for crystallizing the polyester resin pellets can be carried out on a fluidized bed or a fixed bed by using a heated inert gas such as a heated nitrogen gas, or can be carried out in a vacuum heating furnace.

Next, the pellets of the crystallized polyester resin are subjected to the solid-phase polymerization. Unlike the case of the melt-polymerization, the solid-phase polymerization helps lower the formation of low molecular components that become a cause of deposition on the conveyer means accompanying an increase in the inherent viscosity and lower the formation of high molecular components having molecular weights smaller than the polymerization degrees among the entangling points. Further, the content of the low molecular components and the high molecular components having molecular weights smaller than the polymerization degrees among the entangling points, decreases with an increase in the temperature of the solid-phase polymerization. Moreover, the content of the low molecular components and the high molecular components having molecular weights smaller than the polymerization degrees among the entangling points, decreases with an increase in the polymerization time. It is desired that the solid-phase polymerization is, usually, conducted at a temperature of 160 to 260°C and, particularly, at a temperature of 180°C to 200°C for 2 to 10 hours and, particularly, for 4 to 6 hours. The heating during the solid-phase polymerization may be the same as that of the case of the crystallization but changing the temperature. Even during the solid-phase polymerization, the crystallization of the polyester resin proceeds to some extent.

It is important that the polyester resin for compression molding of the present invention has an inherent viscosity in a range of 0.60 to 1.3 dL/g and, particularly, in a range of 0.65 to 0.90 dL/g to suppress the draw-down tendency of the molten resin, to prevent the resin from losing fluidity at the time of compression-molding and to prevent the occurrence of scars on the preform due to a cutter marking.

In the present invention, further, it is desired that the melt viscosity at a shearing rate of 2000 (1/sec) at a temperature of 265°C is in a range of 100 to 500 Pa·s. This makes it possible to smoothly fluidize the molten resin at the time of compression molding while suppressing the draw-down tendency and to improve the formability. The melt viscosity at a shearing rate of 2000 (1/sec) and at a temperature of 265°C is used as a reference from the standpoint of using, as a reference, the fluidized distortion occurring in the molten resin due to the surfaces of the female mold and the male mold during the compression molding. Upon setting the melt viscosity of when the fluidized distortion takes place to set within the above range, it becomes possible to satisfy the conflicting properties of suppressing the draw-down tendency during the melt-extrusion and the fluidity of the molten resin during the compression molding.

### (Production of the preform)

The preform according to the present invention is produced by compression-molding the polyester resin having features as described above.

By using the polyester resin having an inherent viscosity of 0.6 to 1.3 dL/g, a DEG content of smaller than 2.3 mol% and containing MHET and BHET in a total amount of not larger than 0.005% by weight, no matter deposits or builds up on the molten resin mass conveyer means such as the holder and the throat in the device for feeding the mass of the molten resin into the compression-molding machine despite the operation is continued for extended periods of time, the conveyer means needs not be frequently cleaned, and the preform can be efficiently produced.

That is, the preform is formed by continuously extruding a melt of the polyester resin for compression molding of the invention by using an extruder, by cutting the melt by using a cutter means (cutter) of the device for feeding the synthetic resin to produce a mass of the molten resin (drop) which is a molded precursor for forming preform in a molten state, holding the mass of the molten resin by the holder means (holder), throwing the mass of the molten resin into a cavity mold of the compression-molding machine through a guide means (throat), and compression-molding the mass of the molten resin in a core mold followed by solidification by cooling.

In producing the preform of the invention, further, it is desired that the molten polyester resin is melt-extruded at a temperature in a range of Tm + 5°C to Tm + 40°C and, particularly, in a range of Tm + 10°C to Tm + 30°C with the melting point (Tm) of the polyester resin as a reference from the standpoint of forming a homogeneously melt-extruded article preventing the thermal deterioration and draw-down of the resin.

It is further desired that the molten resin is kneaded by using an extruder while effecting the venting to suppress the elution of oligomer components and high molecular components having molecular weights smaller than the polymerization degrees among the entangling points, further suppressing the melt-extruded material from adhering, and preventing the deposition on the holder and on the throat.

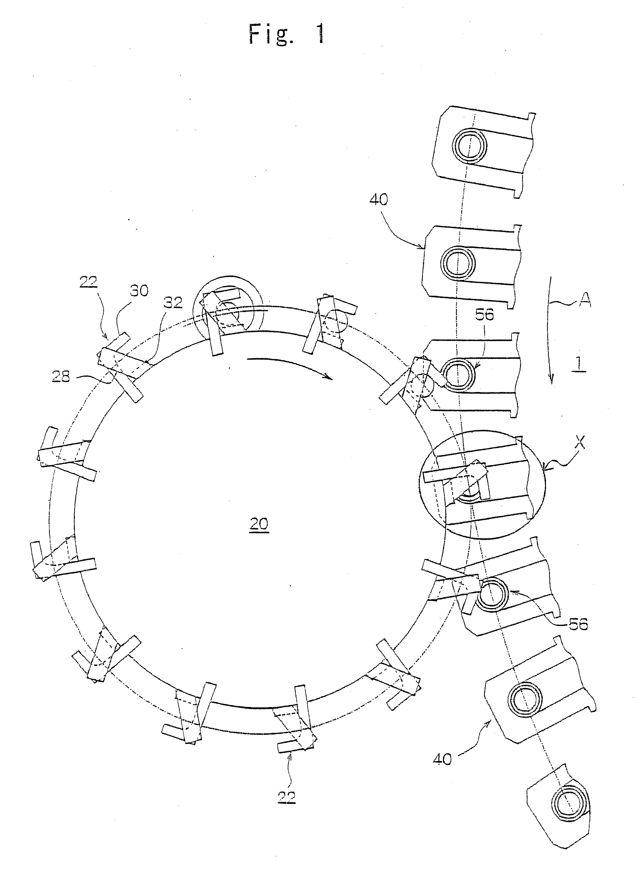

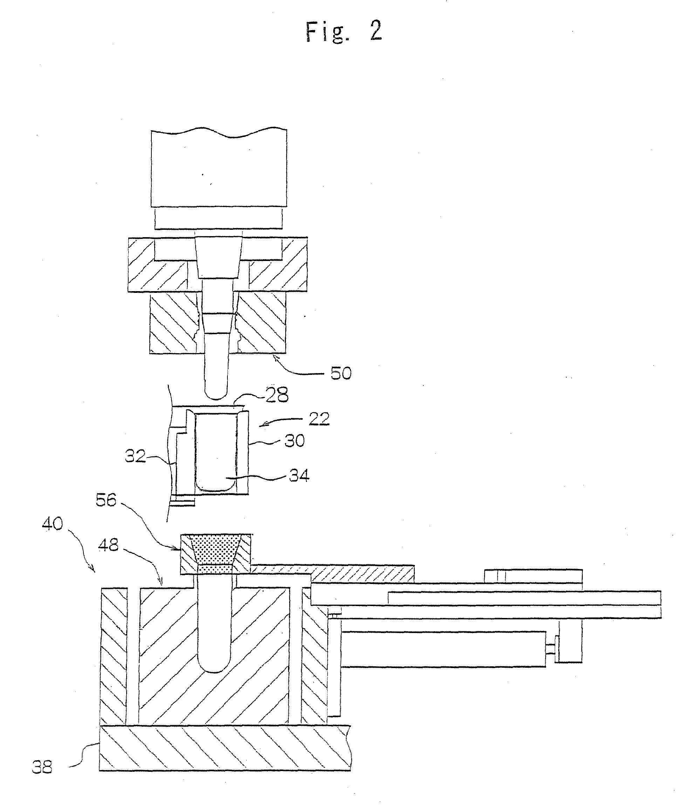

Figs. 1 and 2 are views illustrating the molding apparatus used for forming a preform by using the polyester resin for compression molding of the present invention, wherein Fig. 1 is a view illustrating the molding system as a whole, and Fig. 2 is a sectional view of a portion X in Fig. 1, i.e., a partial sectional view illustrating a state where a cutting/holding means is holding a mass of a molten resin for falling the mass of the molten resin.

The compression-molding apparatus which as a whole is designated at 1 includes a rotary disk 38 of a relatively large diameter that rotates in a direction indicated by an arrow A. A plurality of metal molds 40 are arranged along the peripheral edge of the rotary disk 38 maintaining an equal distance in the circumferential direction. Each metal mold 40 comprises a female mold 48 and a male mold 50. When the metal mold 40 is brought to a position for feeding the mass of the molten resin, the male molds ascends to an open position, and a mass 34 of the molten resin is fed into the female mold 48 from the cutting/holding mechanism 22 of the synthetic resin feeding device 20. When the metal mold 40 is brought to the molding zone, the male mold 50 descends to a closed position, whereby the mass 34 of the molten resin is compression-molded into a preform of a required shape due to the cooperation of the female mold 48 and the male mold 50. When the metal mold 40 arrives at a delivering position, the male mold 50 ascends to the open position, and the preform that is formed is taken out.

If described in further detail, the mass 34 of the molten resin obtained by cutting a strand extruded from the extruder by using a cutting means 28, is held by a cutting/holding means comprising a holder 30 and a pusher 32. When the metal mold 40 arrives at a feeding position, the pusher 32 moves causing the mass 34 of the molten resin to fall down. The female mold 48 is provided with a throat 56 through which the mass 34 of the molten resin is fed into the female mold 48 maintaining stability. In the present invention, the oligomer components and high molecular components in the mass of the molten resin are suppressed from depositing on the holder and on the throat, making it possible to maintain constant the timing for falling the mass of the molten resin and, hence, to feed the mass of the molten resin into the metal molds maintaining stability for extended periods of time.

The preform formed by using the polyester resin for compression-molding of the present invention can be draw-blow-molded into draw-molded containers such as bottles, wide-mouth cups, etc.

In the draw-blow-molding, the preform formed by using the polyester resin for compression molding of the invention is heated at a drawing temperature, is drawn in the axial direction and is further biaxially draw-blow molded in the circumferential direction to produce a biaxially drawn container.

The forming of the preform and its draw-blow molding can be applied to a cold parison method as well as to a hot parison method which effects the draw-blow molding without completely cooling the preform.

Prior to the draw-blowing, the preform is, as required, pre-heated up to a temperature suited for being drawn by such means as hot air, infrared ray heater or high-frequency induction heating. The temperature range is, in the case of a polyester, in a range of 85 to 120°C and, particularly, 95 to 110°C.

The preform is fed to a draw-blow molding machine which is known per se, set in the metal mold, is stretched and drown in the axial direction by pushing a drawing rod, and is draw-molded in the circumferential direction by blowing a fluid. Desirably, the metal mold temperature is in a range of room temperature to 230°C. When the preform is thermally fixed by a one-molding method as will be described, however, it is desired that the metal mold temperature is set to be 120 to 180°C.

It is desired that the final drawing ratio of the polyester container is suitably 1.5 to 25 times in terms of the area ratio and wherein the drawing ratio in the axial direction is, desirably, 1.2 to 6 times and the drawing ratio in the circumferential direction is, desirably, 1.2 to 4.5 times. The polyester container of the present invention can be thermally fixed by means that has been known per se. The thermal fixing can be effected by either the one-molding method which is carried out in a blow molding metal mold or the two-molding which is carried out in a metal mold for thermal fixing separate from the blow molding metal mold. The temperature for the thermal fixing is suitably in a range of 120 to 230°C.

As another draw-blow molding method, there may be employed a two-stage blow molding method by forming a preform as a primary blow molded article of a size larger than the finally molded article by using a primary blow metal mold, heating and contracting the primary blow molded article, and effecting the draw-blow molding by using a secondary blow metal mold to form a finally molded article as taught in Japanese Patent No. 2917851 concerned with the present applicant.

### (Examples)

### 1. Measurement of polyethylene terephthalate (hereinafter referred to as PET) resin pellets.

### (1) Inherent viscosity (IV).

0.2 Grams of pellets of the PET resin dried at 150°C for 4 hours was weighed, and was completely dissolved in 20 ml of a mixed solvent of 1,1,2,2-tetrachloroethane/phenol (1/1)(weight ratio) with stirring at 120°C for 20 minutes. After dissolved, the solution was cooled down to room temperature, passed through a glass filter and was measured for its inherent viscosity by using the Ubbelohde's viscometer [manufactured by Kusano Kagaku Kikai Seisakusho Co.] maintained at a temperature of 30°C.

### (2) Amount of DEG.

A sample was cut from a portion about 5 mm under the neck ring of the preform that was formed, dissolved in a mixed solvent of trifluorobiacetic acid/bichloroform (1/1)(weight ratio), and was measured for its 1H-NMR spectra by using an NMR apparatus [EX270, manufactured by Nihon Denshi Datum Co.]. The content of DEG was calculated from a ratio of the peak integrated values stemming from the DEG moiety (4.27 ppm) and the terephthalic acid moiety (8.22 ppm) in the obtained spectra.

### (3) Contents of MHET and BHET.

0.5000 g of pellets of the PET resin was correctly weighed, and was completely dissolved in 10 ml of hexafluoroisopropanol/chloroform (1/1) in an Erlenmeyer flask, followed by the addition of 20 ml of chloroform. To this solution, a total of 200 ml of a tetrahydrofuran (THF) for HPLC was gradually added dropwise and was left to stand for 4 hours to precipitate the PET polymer. The extracted solution was filtered through a 5A-filtering paper, and the filtrate was taken into an eggplant-type flask. The solution was condensed in an evaporator until it was just dried and solidified, and the residue was dissolved in a dimethylformamide (DMF), and was introduced into a messflask in an amount of 10 ml. The solution was analyzed and determined by using the HPLC. The MHET and the BHET were determined by using calibration curves of annular trimers to calculate their contents in the pellets.

### (4) Measurement of melt viscosity.

Pellets of the PET resin dried at 150°C for 4 hours was measured for its melt viscosity at a temperature of 265°C and a shearing rate of 2000 sec⁻¹ by using a melt viscosity measuring apparatus [CAPIROGRAPH 1B: manufactured by Toyo Seiki Seisakusho Co.]. The melting time of the resin in this case was 5 minutes, the capillary length was 10 mm and the capillary diameter was 1.0 mm.
2. Evaluating the change in the timing for falling the mass of the molten resin during the compression molding, draw down and shaping.

Pellets of the PET resin were dried at 150°C for 4 hours, extruded at 270°C and cut by cutting means to continuously form a mass of the molten resin. Two hours after the start of the compression molding of the preform by using the mass of the molten resin, there were evaluated by eyes a change in the timing for falling the mass of the molten resin, presence of draw-down and shaping of the preform.

### (Example 1)

A PET resin having an inherent viscosity of 0.65 dL/g, a DEG content of 2.1 mol%, a total content of MHET and BHET of 0.0029% by weight and a melt viscosity at 265°C of 154 Pa·s was compression-molded to observe the change in the timing for falling the mass of the molten resin, draw-down and shaping.

### (Example 2)

A PET resin having an inherent viscosity of 0.74 dL/g, a DEG content of 1.9 mol%, a total content of MHET and EHET of 0.0022% by weight and a melt viscosity at 265°C of 186 Pa·s was compression-molded to observe the change in the timing for falling the mass of the molten resin, draw-down and shaping.

### (Example 3)

A PET resin having an inherent viscosity of 0.75 dL/g, a DEG content of 2.2 mol%, a total content of MHET and BHET of 0.0022% by weight and a melt viscosity at 265°C of 189 Pa·s was compression-molded to observe the change in the timing for falling the mass of the molten resin, draw-down and shaping.

### (Example 4)

A PET resin having an inherent viscosity of 1.00 dL/g, a DEG content of 2.2 mol%, a total content of MHET and BHET of 0.0048% by weight and a melt viscosity at 265°C of 274 Pa·s was compression-molded to observe the change in the timing for falling the mass of the molten resin, draw-down and shaping.

### (Example 5)

A PET resin having an inherent viscosity of 1.27 dL/g, a DEG content of 2.2 mol%, a total content of MHET and BHET of 0.0000% by weight and a melt viscosity at 265°C of 457 Pa·s was compression-molded to observe the change in the timing for falling the mass of the molten resin, draw-down and shaping. (Comparative Example 1)

A PET resin having an inherent viscosity of 0.58 dL/g, a DEG content of 2.2 mol%, a total content of MHET and BHET of 0.0031% by weight and a melt viscosity at 265°C of 98 Pa·s was compression-molded to observe the change in the timing for falling the mass of the molten resin, draw-down and shaping. (Comparative Example 2)

A PET resin having an inherent viscosity of 0.74 dL/g, a DEG content of 2.2 mol%, a total content of MHET and BHET of 0.0053% by weight and a melt viscosity at 265°C of 172 Pa·s was compression-molded to observe the change in the timing for falling the mass of the molten resin, draw-down and shaping.

### (Comparative Example 3)

A PET resin having an inherent viscosity of 0.74 dL/g, a DEG content of 2.7 mol%, a total content of MHET and BHET of 0.0061% by weight and a melt viscosity at 265°C of 180 Pa·s was compression-molded to observe the change in the timing for falling the mass of the molten resin, draw-down and shaping. (Comparative Example 4)

A PET resin having an inherent viscosity of 0.76 dL/g, a DEG content of 2.8 mol%, a total content of MHET and BHET of 0.0038% by weight and a melt viscosity at 265°C of 179 Pa·s was compression-molded to observe the change in the timing for falling the mass of the molten resin, draw-down and shaping. (Comparative Example 5)

A PET resin having an inherent viscosity of 1.40 dL/g, a DEG content of 2.1 mol%, a total content of MHET and BHET of 0% by weight and a melt viscosity at 265°C that could not be measured was compression-molded to observe the change in the timing for falling the mass of the molten resin, draw-down and shaping.

Table 1 shows the observed results in the above Examples and Comparative Examples.

**Table 1**

| | Pellets | | | | Holder | Drawdown | Shaping |
|---|---|---|---|---|---|---|---|
| | Inherent viscosity (IV) | DEG (mol%) | Content of MHET + BHET (%) | Melt viscosity (pa·s) | Change in the timing for dropping the mass | | |
| Ex. 1 | 0.65 | 2.1 | 0.0029 | 154 | no | ○ | ○ |
| Ex. 2 | 0.74 | 1.9 | 0.0022 | 186 | no | ○ | ○ |
| Ex. 3 | 0.75 | 2.2 | 0.0022 | 189 | no | ○ | ○ |
| Ex. 4 | 1 | 2.2 | 0.0048 | 274 | no | ○ | ○ |
| Ex. 5 | 1.27 | 2.2 | 0 | 457 | no | ○ | ○ |
| Comp.Ex. 1 | 0.58 | 2.2 | 0.0031 | 98 | no | × | ○ |
| Comp.Ex. 2 | 0.74 | 2.2 | 0.0053 | 172 | yes | ○ | ○ |
| Comp.Ex. 3 | 0.74 | 2.7 | 0.0061 | 180 | yes | ○ | ○ |
| Comp.Ex. 4 | 0.76 | 2.8 | 0.0038 | 179 | yes | ○ | ○ |
| Comp.Ex. 5 | 1.4 | 2.1 | 0 | could not be measured | no | ○ | × |

| | | | | | | | |
|---|---|---|---|---|---|---|---|
| Melt viscosities are not 265°C and a shearing rate of 2000 sec⁻¹ | | | | | | | |

## Claims

1. A polyester resin for compression molding comprising chiefly ethylene terephthalate units and having an inherent viscosity in a range of 0.6 to 1.3 dL/g, containing a diethylene glycol in an amount of smaller than 2.3 mol%, and containing a monohydroxyethyl terephthalate and a bishydroxyethyl terephthalate in a total amount of not larger than 0.005% by weight.

2. A polyester resin for compression molding according to claim 1, wherein the polyester resin has a melt viscosity of 100 to 500 Pa·s at a temperature of 265°C and at a shearing rate of 2000 sec⁻¹.

3. A method of producing a preform by using a polyester resin comprising chiefly ethylene terephthalate units and having an inherent viscosity in a range of 0.6 to 1.3 dL/g, containing a diethylene glycol in an amount of smaller than 2.3 mol%, and containing a monohydroxyethyl terephthalate and a bishydroxyethyl terephthalate in a total amount of not larger than 0.005% by weight, feeding a mass of a molten resin of a polyester resin obtained by melt-kneading said polyester resin to a compression-molding machine by using a conveyer means, and compression-molding the mass of the molten resin.

4. A preform obtained by compression-molding a mass of a molten resin of a polyester resin obtained by melt-kneading a polyester resin comprising chiefly ethylene terephthalate units and having an inherent viscosity in a range of 0.6 to 1.3 dL/g, containing a diethylene glycol in an amount of smaller than 2.3 mol%, and containing a monohydroxyethyl terephthalate and a bishydroxyethyl terephthalate in a total amount of not larger than 0.005% by weight.
